# EUROPÄISCHE PATENTSCHRIFT

(11) **EP 1 829 387 B1**
(45) Veröffentlichungstag und Bekanntmachung des Hinweises auf die Patenterteilung: **09.12.2009**
(21) Anmeldenummer: 05801752.6
(22) Anmeldetag: 03.11.2005
(51) Int. Cl.: H04Q 1/14, H01T 4/06, H01R 13/66, H01R 12/18

(54) **KABELSTECKVERBINDER FÜR LEITERPLATTEN**
CABLE CONNECTOR FOR PRINTED CIRCUIT BOARDS
CONNECTEUR DE CARTE POUR CARTES DE CIRCUITS IMPRIMES

(30) Priorität: 22.12.2004 DE 102004061681
(43) Veröffentlichungstag der Anmeldung: 05.09.2007
(73) Patentinhaber: ADC GMBH, 14167 Berlin (DE)
(72) Erfinder: NEUMETZLER, Heiko, 12623 Berlin (DE); KLEIN, Harald, 10318 Berlin (DE)
(86) Internationale Anmeldenummer: PCT/EP2005/011767
(87) Internationale Veröffentlichungsnummer: WO 2006/074723

(56) Entgegenhaltungen:
- AU-B2- 762 700
- DE-A1- 10 029 649
- DE-A1- 19 816 907
- US-A- 5 086 368
- US-B1- 6 511 327

## Beschreibung

Die Erfindung betrifft einen Kabelsteckverbinder für Leiterplatten.

Aus der DE 102 57 308 B3 ist ein Steckverbinder für Leiterplatten bekannt, umfassend eine Anzahl von Kontaktelementen, wobei die Kontaktelemente jeweils zwei Anschlussseiten aufweisen, wobei die eine Anschlussseite als Schneid-Klemm-Kontakt zum Anschließen von Adern und die andere Anschlussseite als Gabelkontakt zum Kontaktieren von Anschlussflächen auf einer Leiterplatte ausgebildet ist, und ein Kunststoffgehäuse, in das die Schneid-Klemm-Kontakte der Kontaktelemente einsteckbar sind, wobei der Schneid-Klemm-Kontakt und der Gabelkontakt zueinander verdreht angeordnet sind und mindestens eine Unterkante des Schneid-Klemm-Kontaktes sich am Kunststoffgehäuse abstützt, so dass die Kontaktelemente bei auftretenden Anschaltkräften auf die Schneid-Klemm-Kontakte verliersicher in dem Kunststoffgehäuse gehalten werden, wobei das Kunststoffgehäuse mindestens einen kammerförmigen Bereich umfasst und die Gabelkontakte in Längsrichtung von dem Kunststoffgehäuse vollständig aufgenommen sind, wobei in dem kammerförmigen Bereich an den Innenseiten Rippen angeordnet sind, die Führungen für die Gabelkontakte definieren, wobei die Kontaktbereiche der Gabelkontakte über die Rippen hervorstehen und die Rippen im vorderen Bereich abgeschrägt sind.

Derartige Kabelsteckverbinder dienen beispielsweise dazu, zusammen mit einem Gehäuseteil, das die Leiterplatte trägt, ein Verteileranschlussmodul zu bilden, was auch bereits in der DE 102 57 308 B3 beschrieben ist.

Ein solches Verteileranschlussmodul ist auch aus der DE 100 29 649 A1 vorbekannt, umfassend ein Gehäuse, in dem von außen zugänglich Eingangs- und Ausgangskontakte zum Anschließen von Leitungen und Adern angeordnet sind, wobei das Gehäuse mit einem Hohlraum ausgebildet ist, in dem Funktionselemente zwischen den Eingangs- und Ausgangskontakten angeordnet sind. Die Funktionselemente sind auf mindestens einer Leiterplatte angeordnet, die in dem Gehäuse abgestützt ist, wobei die Funktionselemente beispielsweise als Überspannungsschutz ausgebildet sind. Daneben können die Funktionselemente auch Filterschaltungen wie beispielsweise XDSL-Splitter sein.

Die Anordnung der Filterschaltung auf der gleichen Leiterplatte wie die Überspannungsableiter hat jedoch einige Nachteile. Neben dem erhöhten Herstellungsaufwand für die Bestückung steigt insbesondere die Anzahl der für den Leitungsweg notwendigen Kontaktstellen. Damit sinkt jedoch die Zuverlässigkeit des Verteileranschlussmoduls insbesondere dann, wenn diese Kontaktstellen hohen Strombelastungen standhalten müssen. Weiter sinkt durch die Platzierung der Überspannungsableiter auf der Hauptplatine dort der verfügbare Bauraum für die Filterschaltungen. Des Weiteren erfordern Überspannungsableiter meist erhöhte Kupferdicken, was sich ebenfalls in Kosten und Platzbedarf niederschlägt. Solche Hauptplatinen sind üblicherweise für mehrere Teilnehmer ausgelegt und in Gestellsystemen stapelweise angeordnet. Des Weiteren muss zum Austausch eines defekten Überspannungsableiters die komplette Hauptplatine entfernt werden. Dabei würden auch nicht beteiligte Teilnehmer unterbrochen und negativ beeinträchtigt werden. Alternativ könnten die Überspannungsableiter auch von oben auf dem Kabelsteckverbinder aufgesteckt werden, wobei dann jedoch die Kontakte nicht mehr für ein Rangieren frei zugänglich werden.

Der Erfindung liegt das technische Problem zugrunde, einen Kabelsteckverbinder zu schaffen, mittels dessen einfach und kostengünstig ein Überspannungsschutz der anzuschließenden Adern oder Leitungen realisierbar ist.

Die Lösung des technischen Problems ergibt sich durch den Gegenstand mit den Merkmalen des Anspruchs 1. Weitere vorteilhafte Ausgestaltungen der Erfindung ergeben sich aus den Unteransprüchen.

Hierzu ist elektrisch zwischen den Kontaktelementen ein Überspannungsableiter angeordnet, der innerhalb des Gehäuses angeordnet ist. Hierdurch werden mehrere Vorteile erzielt. Zum einen kann nun eine Hauptplatine platztechnisch besser genutzt werden. Zum anderen erfolgt der Überspannungsschutz bereits vor der Hauptplatine und kann direkt an der Eintrittsstelle abgeleitet werden. Insbesondere bei Ausführungsformen mit nur zwei Kontaktelementen für einen Teilnehmer kann der Kabelsteckverbinder bei defekten Überspannungsableitem gezogen werden und der defekte Überspannungsableiter bzw. der Kabelsteckverbinder als ganzes ausgetauscht werden, ohne die anderen Teilnehmer zu stören. Bei einer Ausführungsform mit vier Kontaktelementen wäre nur ein weiterer Teilnehmer gestört.

In einer bevorzugten Ausführungsform ist der Überspannungsableiter lösbar mit den Kontaktelementen verbunden. Hierdurch muss bei einem Defekt des Überspannungsableiters nur dieser ausgewechselt werden und nicht der komplette Kabelsteckverbinder. Des Weiteren hat dies auch Vorteile hinsichtlich eines einfachen Recyclings.

Vorzugsweise ist zur lösbaren Anordnung des Überspannungsableiters an den Kontaktelementen jeweils ein weiterer Gabelkontakt angeordnet. Die Form der Gabelkontakte ist dabei vorzugsweise an die Form der Kontakte des Überspannungsableiters angepasst.

In einer weiteren bevorzugten Ausführungsform sind die Gabelkontakte für die Leiterplatte (Hauptplatine) und die Überspannungsableiter zueinander parallel ausgerichtet, wobei der Gabelkontakt für die Leiterplatte (Hauptplatine) im Bereich der Seitenwände des Gehäuses angeordnet ist und der Gabelkontakt für den Überspannungsableiter seitlich nach innen versetzt ist. Hierdurch wird der Bauraum für den Kabelsteckverbinder optimal genutzt, da der Überspannungsableiter zwischen den Gabelkontakten für die Leiterplatte (Hauptplatine) liegt. Vorzugsweise ragt der Gabelkontakt für die Leiterplatte bis an den unteren Rand des Gehäuses, so dass dieser weitgehend im Gehäuse geführt ist.

In einer weiteren bevorzugten Ausführungsform ist der Gabelkontakt für den Überspannungsableiter in das Gehäuse zurückversetzt und/oder zum Gabelkontakt parallel verschoben, so dass der kontaktierte Überspannungsableiter den Einsteckvorgang auf die Leiterplatte nicht behindert.

In einer weiteren bevorzugten Ausführungsform ist der Überspannungsableiter auf einer separaten Leiterplatte angeordnet, was insbesondere das Auswechseln stark vereinfacht.

In einer weiteren bevorzugten Ausführungsform sind Feinschutzelemente wie PTC-Widerstände und Dioden auf der Leiterplatte (Hauptplatine) angeordnet.

In einer weiteren bevorzugten Ausführungsform ist das Gehäuse des Kabelsteckverbinders zweiteilig ausgebildet.

In einer weiteren bevorzugten Ausführungsform sind die Kontaktelemente zweiteilig ausgebildet, wobei das eine Kontaktteil den Kontakt zum Anschließen der Adern und das andere Kontaktteil den Gabekontakt für die Leiterplatte (Hauptplatine) umfasst, wobei jedes Kontaktteil einen federnden Kontaktarm umfasst, die zusammen einen Trennkontakt bilden.

Die Erfindung wird nachfolgend anhand eines bevorzugten Ausführungsbeispieles näher erläutert. Die Fig. zeigen:
- Fig. 1: eine perspektivische Unteransicht des Kabelsteckverbinders ohne unteres Gehäuseteil,
- Fig. 2: eine perspektivische Unteransicht des Kabelsteckverbinders mit unterem Gehäuseteil,
- Fig. 3: eine Seitenansicht des Kabelsteckverbinders mit oberem und unterem Gehäuseteil,
- Fig. 4: einen Querschnitt entlang des Schnittes A-A,
- Fig. 5: einen Querschnitt entlang des Schnittes B-B und
- Fig. 6: eine Draufsicht auf den Kabelsteckverbinder.

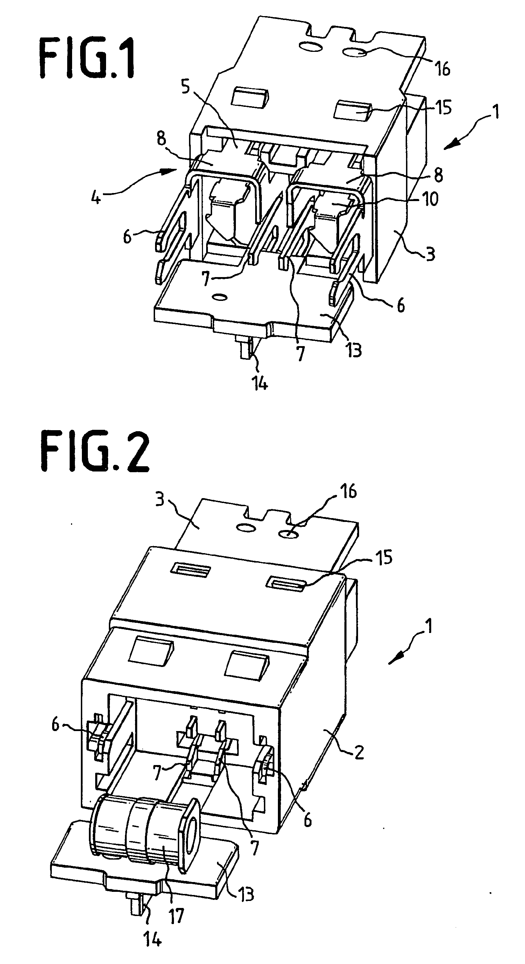

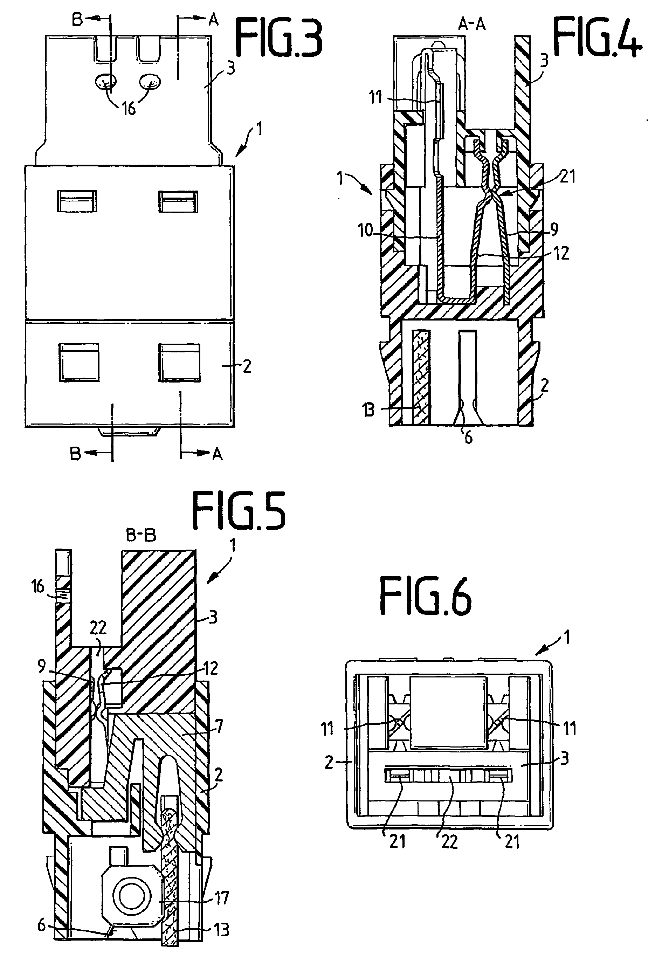

In der Fig. 1 ist der Kabelsteckverbinder 1 perspektivisch in einer Unteransicht ohne unteres Gehäuseteil 2 (siehe Fig. 2) dargestellt. Der Kabelsteckverbinder 1 umfasst ein oberes Gehäuseteil 3, in das von unten Kontaktelemente 4 einsteckbar sind, die durch entsprechende Führungen im Gehäuseteil 3 geführt sind. Die Kontaktelemente 4 sind zweiteilig ausgebildet, wobei ein erstes Kontaktteil 5 zwei Gabelkontakte 6,7 umfasst, die über eine U-förmige Biegung 8 miteinander verbunden sind. Von der U-förmigen Biegung geht weiter ein federnder Kontaktarm 9 nach oben ab, der besonders gut in Fig. 4 erkennbar ist. Das zweite Kontaktteil 10 umfasst einen Schneid-Klemm-Kontakt 11 (siehe Fig. 4) und einen weiteren federnden Kontaktarm 12. Die beiden federnden Kontaktarme 9,12 bilden dann einen Trennkontakt (siehe Fig. 4). Die beiden Gabelkontakte 6,7 sind dabei zueinander parallel ausgerichtet, wobei jedoch der Gabelkontakt 7 nach oben (in Richtung oberes Gehäuseteil 3) versetzt ist, sowie parallel verschoben (weg von der U-förmigen Biegung 8). Des Weiteren umfasst der Kabelsteckverbinder 1 eine Leiterplatte 13, auf der ein Überspannungsableiter 17 (siehe Fig. 2) angeordnet ist. Die Leiterplatte 13 wird dabei über die beiden Gabelkontakte 7 kontaktiert. Durch die versetzte Anordnung der Gabelkontakte 7 bleiben dabei jedoch die Gabelkontakte 6 frei zugänglich, so dass über diese eine weitere Leiterplatte mit Funktionselementen (Hauptplatine) kontaktierbar ist. Die Leiterplatte 13 weist ferner einen Erdkontakt 14 auf, mittels dessen eine Masseverbindung, beispielsweise über ein Trägergestell, hergestellt werden kann. Das obere Gehäuseteil 3 ist an den Seitenflächen mit Rastnasen 15 ausgebildet, die zum Verrasten mit dem unteren Gehäuseteil 2 dienen, was in Fig. 2 dargestellt ist. Weiter weist das Gehäuseteil 3 Rastöffnungen 16 auf, die zum Aufnehmen von Rastnoppen eines nicht dargestellten Steckers dienen. Das untere Gehäuseteil 2 weist ebenfalls Rastnasen 18 auf, mittels derer der Kabelsteckverbinder 1 mit einem weiteren nicht dargestellten Gehäuse, das die Hauptplatine trägt, verrastbar ist.

In der Fig. 3 ist eine Seitenansicht des Kabelsteckverbinders 1 dargestellt, wobei in den Fig. 4 und 5 die Querschnitte entlang der Schnittlinien A-A bzw. B-B dargestellt sind. In der Fig. 4 erkennt man, wie sich das zweite Kontaktteil 10 an einer Auflage des unteren Gehäuseteils 2 abstützt, wodurch die auftretenden Anschaltkräfte vom Gehäuse aufgenommen werden. Des Weiteren erkennt man, wie die beiden federnden Kontaktarme 9,12 einen Trennkontakt 21 bilden. Im oberen Gehäuseteil 3 ist ein Einsteckkanal 22 vorhanden, in den ein nicht dargestellter Trenn- oder Prüfstecker einsteckbar ist, durch den der Trennkontakt 21 auftrennbar ist. Wird der Trenn- oder Prüfstecker wieder gezogen, so federn die beiden Kontaktarme 9,12 wieder zurück und kontaktieren sich.

In der Fig. 6 ist der Kabelsteckverbinder 1 in einer Draufsicht dargestellt, so dass man insbesondere den langgestreckten Einsteckkanal 22 erkennt sowie die Verdrehung der Schneid-Klemm-Kontakte 11 um 45 ° zu den Gabelkontakten 6, 7.

### Bezugszeichenliste

- 1: Kabelsteckverbinder
- 2: Gehäuseteil
- 3: Gehäuseteil
- 4: Kontaktelement
- 5: Kontaktteil
- 6: Gabelkontakt
- 7: Gabelkontakt
- 8: U-förmige Biegung
- 9: Kontaktarm
- 10: Kontaktteil
- 11: Schneid-Klemm-Kontakt
- 12: Kontaktarm
- 13: Leiterplatte
- 14: Erdkontakt
- 15: Rastnase
- 16: Rastöffnung
- 17: Überspannungsableiter
- 18: Rastnase
- 20: Auflage
- 21: Trennkontakt
- 22: Einsteckkanal

## Patentansprüche

1. Kabelsteckverbinder für Leiterplatten, umfassend ein Gehäuse (2,3) und mindestens zwei Kontaktelemente (4), wobei jedes Kontaktelement (4) einen Kontakt (11) zum Anschließen von elektrischen Adern und einen Gabelkontakt (6) zum Kontaktieren einer Hauptplatine umfasst, wobei elektrisch zwischen den Kontaktelementen (4) ein Überspannungsableiter (17) angeordnet ist, der innerhalb des Gehäuses (2,3) angeordnet ist,
**dadurch gekennzeichnet, dass**
sowohl jeder Kontakt (11) zum Anschließen der elektrischen Adern als auch jeder Gabelkontakt (6) zum Kontaktieren der Hauptplatine von außerhalb des Gehäuses (2,3) zugänglich ist.

2. Kabelsteckverbinder nach Anspruch 1, **dadurch gekennzeichnet, dass** der Überspannungsableiter (17) lösbar mit den Kontaktelementen (4) verbunden ist.

3. Kabelsteckverbinder nach Anspruch 2, **dadurch gekennzeichnet, dass** an den Kontaktelementen (4) jeweils ein weiterer Gabelkontakt (7) angeordnet ist, mittels derer der Überspannungsableiter (17) kontaktiert ist.

4. Kabelsteckverbinder nach Anspruch 3, **dadurch gekennzeichnet, dass** die Gabelkontakte (6,7) parallel zueinander ausgerichtet sind, wobei der Gabelkontakt (6) für die Leiterplatte im Bereich der Seitenwände des Gehäuses angeordnet ist und der Gabelkontakt (7) für den Überspannungsableiter (17) seitlich nach innen versetzt angeordnet ist.

5. Kabelsteckverbinder nach Anspruch 3 oder 4, **dadurch gekennzeichnet, dass** der Gabelkontakt (6) für die Hauptplatine bis an den unteren Rand des Gehäuses (2,3) ragt.

6. Kabelsteckverbinder nach einem der Ansprüche 3 bis 5, **dadurch gekennzeichnet, dass** der Gabelkontakt (7) für den Überspannungsableiter (17) in das Gehäuse (2,3) zurückversetzt ist und/oder zum Gabelkontakt (6) parallel verschoben ist.

7. Kabelsteckverbinder nach einem der vorangegangenen Ansprüche, **dadurch gekennzeichnet, dass** der Überspannungsableiter (17) auf einer Leiterplatte (13) angeordnet ist.

8. Kabelsteckverbinder nach einem der vorangegangenen Ansprüche, **dadurch gekennzeichnet, dass** das Gehäuse (2,3) zweiteilig ausgebildet ist.

9. Kabelsteckverbinder nach einem der vorangegangenen Ansprüche, **dadurch gekennzeichnet, dass** die Kontaktelemente (4) zweiteilig ausgebildet sind, wobei das eine Kontaktteil (10) den Kontakt (11) zum Anschließen der Adern und das andere Kontaktteil (5) den Gabelkontakt (6) für die Hauptplatine umfasst, wobei jedes Kontaktteil (10,5) einen federnden Kontaktarm (12,9) umfasst, die zusammen einen Trennkontakt (21) bilden.

## Claims

1. Cable connector for printed circuit boards, comprising a housing (2,3) and at least two contact elements (4), each contact element (4) comprising a contact (11) for connecting electrical wires and a fork contact (6) for making contact with a main board, a surge arrester (17) which is arranged within the housing (2, 3) being arranged electrically between the contact elements (4), **characterized in that** both each contact (11) for connecting the electrical wires and each fork contact (6) for making contact with the main board is accessible from outside the housing (2,3).

2. Cable connector according to Claim 1, **characterized in that** the surge arrester (17) is connected to the contact elements (4) such that it can be detached.

3. Cable connector according to Claim 2, **characterized in that** in each case a further fork contact (7), by means of which contact is made with the surge arrester (17), is arranged on the contact elements (4).

4. Cable connector according to Claim 3, **characterized in that** the fork contacts (6, 7) are aligned parallel to one another, the fork contact (6) for the printed circuit board being arranged in the region of the side walls of the housing, and the fork contact (7) for the surge arrester (17) being arranged such that it is moved laterally inwards.

5. Cable connector according to Claim 3 or 4, **characterized in that** the fork contact (6) for the main board protrudes up to the lower edge of the housing (2, 3).

6. Cable connector according to one of Claims 3 to 5, **characterized in that** the fork contact (7) for the surge arrester (17) is moved back into the housing (2, 3) and/or is displaced parallel to the fork contact (6).

7. Cable connector according to one of the preceding claims, **characterized in that** the surge arrester (17) is arranged on a printed circuit board (13).

8. Cable connector according to one of the preceding claims, **characterized in that** the housing (2, 3) is of two-part design.

9. Cable connector according to one of the preceding claims, **characterized in that** the contact elements (4) are of two-part design, one contact part (10) comprising the contact for connecting the wires and the other contact part (5) comprising the fork contact (6) for the main board, each contact part (10, 5) comprising a resilient contact arm (12, 9) which together form an isolating contact (21).

## Revendications

1. Connecteur de câble pour cartes de circuits imprimés, comprenant un boîtier (2, 3) et au moins deux éléments de contact (4), chaque élément de contact (4) comprenant un contact (11) pour le raccordement de fils électriques et un contact de fourche (6) pour le contact d'une platine principale, un dérivateur de surtensions (17), disposé à l'intérieur du boîtier (2, 3), étant disposé électriquement entre les éléments de contact (4),
**caractérisé en ce que**
chaque contact (11) est accessible pour le raccordement des fils électriques et chaque contact de fourche (6) est accessible pour le contact de la platine principale, depuis l'extérieur du boîtier (2, 3).

2. Connecteur de câble selon la revendication 1, **caractérisé en ce que** le dérivateur de surtensions (17) est connecté de manière amovible aux éléments de contact (4).

3. Connecteur de câble selon la revendication 2, **caractérisé en ce qu'**un autre contact de fourche (7) est disposé à chaque fois sur les éléments de contact (4), et permet de réaliser le contact avec le dérivateur de surtensions (17).

4. Connecteur de câble selon la revendication 3, **caractérisé en ce que** les contacts de fourche (6, 7) sont orientés parallèlement l'un à l'autre, le contact de fourche (6) pour la plaque de circuits imprimés étant disposé dans la région des parois latérales du boîtier et le contact de fourche (7) pour le dérivateur de surtensions (17) étant disposé de manière décalée latéralement vers l'intérieur.

5. Connecteur de câble selon la revendication 3 ou 4, **caractérisé en ce que** le contact de fourche (6) pour la platine principale s'étend jusqu'au bord inférieur du boîtier (2, 3).

6. Connecteur de câble selon l'une quelconque des revendications 3 à 5, **caractérisé en ce que** le contact de fourche (7) pour le dérivateur de surtensions (17) est décalé vers l'arrière dans le boîtier (2, 3) et/ou est déplacé parallèlement par rapport au contact de fourche (6).

7. Connecteur de câble selon l'une quelconque des revendications précédentes, **caractérisé en ce que** le dérivateur de surtensions (17) est disposé sur une carte de circuits imprimés (13).

8. Connecteur de câble selon l'une quelconque des revendications précédentes, **caractérisé en ce que** le boîtier (2, 3) est réalisé en deux parties.

9. Connecteur de câble selon l'une quelconque des revendications précédentes, **caractérisé en ce que** les éléments de contact (4) sont réalisés en deux partie, l'une des parties de contact (10) comprenant le contact (11) pour le raccordement des fils et l'autre partie de contact (5) comprenant le contact de fourche (6) pour la platine principale, chaque partie de contact (10, 5) comprenant un bras de contact élastique (12, 9) qui forment ensemble un contact de coupure (21).
